# EUROPÄISCHE PATENTSCHRIFT

(11) **EP 0 300 579 B1**
(45) Veröffentlichungstag und Bekanntmachung des Hinweises auf die Patenterteilung: **14.06.1995**
(21) Anmeldenummer: 88201536.5
(22) Anmeldetag: 15.07.1988
(51) Int. Cl.: G02B 5/28

(54) **Optisches Interferenzfilter**
Optical interference filter
Filtre optique d'interférence

(30) Priorität: 22.07.1987 DE 3724216
(43) Veröffentlichungstag der Anmeldung: 25.01.1989
(73) Patentinhaber: Philips Patentverwaltung GmbH, 22335 Hamburg (DE); Philips Electronics N.V., 5621 BA Eindhoven (NL)
(72) Erfinder: Brock, Lieselotte, D-5100 Aachen (DE); Frank, Günter, D-5100 Aachen (DE); Vitt, Bruno, Dr., D-5100 Aachen (DE)
(74) Vertreter: Rooda, Hans

(56) Entgegenhaltungen:
- EP-A- 0 170 320
- DE-A- 2 457 474
- SU-A- 306 520
- PATENT ABSTRACTS OF JAPAN, Band 8, Nr 269 (P-319)(1706), 8. Dezember 1984; & JP-A-59 136 706
- PATENT ABSTRACTS OF JAPAN, Band 9, Nr 41 (C-267)(1764), 21. Februar 1985; & JP-A-59 184 744

## Beschreibung

Die Erfindung betrifft ein optisches Interferenzfilter mit einer alternierenden Folge von niedrigbrechenden ersten Schichten und hochbrechenden zweiten Schichten auf einem Glassubstrat, wobei die ersten Schichten im wesentlichen aus amorphem SiO₂ bestehen und die zweiten Schichten im wesentlichen aus TiO₂ und einem zweiten Metalloxid bestehen, wobei das zweite Metalloxid aus einer Gruppe gewählt ist, zu der ZrO₂, HfO₂ und Ta₂O₅ gehören.

Gemäß JP-A-59-184 744 werden hochbrechende Schichten aus ZrO₂ und/oder TiO₂ und niedrigbrechende Schichten aus SiO₂ und/oder Al₂O₃ durch alternierendes Aufdampfen im Vakuum auf ein Glassubstrat aufgebracht. Durch eine Wärmebehandlung bei etwa 450°C, vorzugsweise 650 bis 700°C, bilden sich zwischen den Schichten etwa 3 bis 10 nm dicke diffuse Schichten, wodurch die Abnutzungsbeständigkeit verbessert wird.

Ein Interferenzspiegel mit einer alternierenden Schichtenfolge von Gemischen aus TiO₂ und HfO₂, TiO₂ und ThO₂ oder ThO₂ und HfO₂ einerseits und SiO₂ andererseits ist aus SU-A-306 520 bekannt. Dieser Interferenzspiegel weist gegen Strahlung optischer Quantengeneratoren eine höhere Resistenz auf als Spiegel, die aus einer alternierenden Schichtenfolge von TiO₂ und SiO₂ bestehen. Die Schichten werden mittels Tauchverfahren aus Ethoxid- bzw. Salzlösungen hergestellt und Wärmebehandlungen bei 400°C für die Mischoxidschichten und 500°C für die SiO₂-Schichten unterworfen.

Aus JP-A-59-102 201 sind optische Interferenzüberzüge aus einer alternierenden Schichtenfolge aus Ta₂O₅ und/oder TiO₂ einerseits und SiO₂ andererseits bekannt, wobei einige oder sämtliche Schichten gegebenenfalls P₂O₅ enthalten. Die Schichten werden aus entsprechenden metallorganischen Verbindungen unter Erhitzen auf 200 bzw. 550°C hergestellt. Dadurch, daß die oberste Schicht aus Ta₂O₅ oder Ta₂O₅ + TiO₂ besteht, wird eine hohe Beständigkeit gegen Salzwasser, hohe Temperaturen und hohe Feuchtigkeit erreicht.

Sämtlichen aus den zuvor erwähnten Dokumenten bekannten Schichtenfolgen ist gemeinsam, daß die TiO₂ enthaltenden Schichten wegen den bei der Wärmebehandlung angewandten relativ niedrigen Temperaturen nicht kristallin sind. Aus DE-A-3 334 962 ist bekannt, daß bei 500°C nichtkristalline TiO₂-Schichten erhalten werden, während kristallines TiO₂ erst bei 600°C (Anatas) bzw. 900°C (Rutil) entsteht.

Aus DE-A-3 227 096 ist ein optisches Interferenzfilter für Hochtemperaturanwendungen bei mehr als 500°C bekannt, das aus einer alternierenden Folge von z.B. 27 Schichten aus Ta₂O₅ einerseits und SiO₂ andererseits besteht. Das Ta₂O₅ weist gegebenenfalls einen geringen Prozentsatz eines anderen feuerfesten Oxids, wie TiO₂, auf. Bei einer Wärmebehandlung bei Temperaturen unter 1100°C erhält man ein sichtbares Licht durchlassendes, Infrarot reflektierendes Filter, das in ein sichtbares Licht streuendes, Infrarot reflektierendes Filter umgewandelt wird, wenn die Schichtenfolge in Luft mehrere Stunden auf wenigstens 1100°C erhitzt wird.

Optische Interferenzfilter finden Anwendung z.B. im Bereich der Lasertechnologie, wo bei hohen Leistungen besondere Anforderungen an Spiegel, Strahlteiler und andere optische Komponenten zu stellen sind. Auch bei inkohärenten Lichtquellen wie Gasentladungslampen oder Glühlampen werden optische Filter zur Erhöhung der Lichtausbeute der Lampen, als Farbfilter bzw. Farbkorrekturfilter, sowie als Reflektoren eingesetzt. Die im Falle von Lampen technisch schwierigste Aufgabe ist die Herstellung leistungsfähiger Wärmereflektoren für den nahen infraroten Wellenlängenbereich (0,75 bis etwa 3,5»m). Derartige Filter, die gleichzeitig das sichtbare Licht transmittieren, können die Lichtausbeute moderner Halogen-Glühlampen erheblich erhöhen.

Die Wirkung des Filters ist umso größer, je näher es die Glühwendel umschließt. Bei konsequenter Anwendung dieses Prinzips sind Lichtausbeutesteigerungen von bis zu 100% möglich, vorausgesetzt, die hohen Wandtemperaturen von eventuell mehr als 800°C sind mit der Beständigkeit des Filters verträglich. Als Kolbenmaterial derartiger Halogenglühlampen kommt hauptsächlich Quarzglas in Frage, das erst oberhalb von 1100°C zu kristallisieren beginnt (Bildung von Cristobalit). In Spezialfällen sind allerdings auch dotiertes Quarzglas oder Hartgläser anwendbar.

Die weit verbreitete Verwendung von SiO₂ als niedrigbrechendes Filtermaterial, insbesondere im Falle von Quarzglassubstrat, beruht darauf, daß einerseits die optische Wirksamkeit eines Interferenzfilters mit zunehmender Brechungsindex-Differenz des hoch- und niedrigbrechenden Materials steigt, andererseits Quarzglas einen der niedrigsten Brechungsindizes überhaupt (n = 1,45) besitzt.

Die Auswahl des hochbrechenden Materials zur Konstruktion eines Filters, das sich chemisch, mechanisch und optisch über die gesamte Lebensdauer der Lampe ( 2000 h) nicht verändern sollte, wird von folgenden Kriterien bestimmt:
a) Möglichst hoher Brechungsindex. Hierdurch kommt man bei der Annäherung einer gewünschten Filtercharakteristik mit minimaler Schichtenzahl aus. Ein hoher Brechungsindex-Unterschied garantiert außerdem eine höhere Design-Flexibilität, so daß im Falle von IR-Reflexionsfiltern relativ einfache Designs möglich werden.
b)Gute Haftung auf amorphem SiO₂ (a-SiO₂).
c)Möglichst geringer thermischer Ausdehnungskoeffizient. Da a-SiO₂ nur einen linearen thermischen Ausdehnungskoeffizienten von 0,5.10⁻⁶K⁻¹ besitzt, induziert eine zu hohe Ausdehnung des hochbrechenden Materials starke thermoelastische Spannungen, die bei Temperaturbeanspruchungen des Filters zu Rißbildung und Zerstörung Anlaß geben. Diese Effekte werden erfahrungsgemäß mit zunehmender Filterdicke bzw. Schichtenzahl immer gravierender.
d)Möglichst keine Phasenumwandlungen im Temperaturbereich bis 1100°C. Umkristallisation führt meist zur Bildung von Mikrorissen und im Falle optischer Filter zu unerwünschter Lichtstreuung.

Bei Untersuchungen, die zur Erfindung geführt haben, zeigte sich, daß die maximale Temperaturstabilität optischer Interferenzfilter stark von der Gesamtdicke des Filters abhängt, wobei im wesentlichen die Summendicke der hochbrechenden Schichten entscheidend ist. Bei praktisch allen Stoffsystemen ist eine mit zunehmender Schichtdicke abnehmende thermisch-mechanische Stabilität dünner Schichten oder Schichtpakete zu beobachten.

Der Erfindung liegt die Aufgabe zugrunde, bei Interferenzfiltern auch bei einer hohen Anzahl von Schichten sowohl Rißbildungen bzw. Ablösungserscheinungen als auch kristallographische Phasenübergänge zu unterdrücken.

Diese Aufgabe ist bei einem optischen Interferenzfilter der eingangs genannten Art erfindungsgemäß dadurch gelöst, daß das Material der zweiten Schichten ein kristallines Mischoxid ist, gewählt aus einer Gruppe, die aus
88 bis 95 Mol% TiO₂ und 5 bis 12 Mol% ZrO₂,
88 bis 95 Mol% TiO₂ und 5 bis 12 Mol% HfO₂,
TiO₂.ZrO₂, TiO₂.HfO₂, TiO₂.Nb₂O₅,
TiO₂.Ta₂O₅ und Ta₂O₅.2 TiO₂
sowie aus Mischungen dieser Materialien besteht, wobei die Kristallstruktur der zweiten Schichten einer Kristallstruktur entspricht, die bei einer Wärmebehandlung bei einer Temperatur zwischen 700 und 1100°C entsteht.

Die Dauer der Wärmebehandlung beträgt 2 bis 10 Minuten, z.B. 3 bis 5 Minuten.

Durch die Erfindung wird eine thermo-mechanische und optische Langzeitstabilität bis zu hohen Anwendungstemperaturen von z.B. 900 bis 1100°C bei einer Gesamtdicke der hochbrechenden Metalloxidschichten von mindestens bis 2 Mikrometer erhalten.

Die Erfindung wird an Hand einer Zeichnung und einiger Ausführungsbeispiele näher erläutert. In der Zeichnung zeigen
Fig. 1 Brechungsindizes von Titan-Hafnium-Mischoxid-Tauchschichten als Funktion des Mischungsverhältnisses in einem Diagramm,
Fig. 2a und 2b Röntgenbeugungsdiagramme von 18-Schichten-IR-Filtern mit Ti_{0,88}Hf_{0,12}O₂-Schichten,
3a und 3b Röntgenbeugungsdiagramme von HfTiO₄-Tauchschichten auf Quarzglas,
Fig. 4a und 4b zum Vergleich Röntgenbeugungsdiagramme undotierter TiO₂-Tauchschichten auf Quarzglas,
Fig. 5 das Transmissionsspektrum eines 18-Schichten-Filters mit Ti_{0,88}Hf_{0,12}O₂-Schichten auf Quarzglas vor und nach einem thermischen Alterungstest,
Fig. 6 das Transmissionsspektrum eines Titan-Hafnium-Oxid/SiO₂-Interferenzfilters mit 26 Schichten auf Quarzglassubstrat und
Fig. 7a und 7b Röntgenbeugungsdiagramme von Ta₂O₅.TiO₂-Schichten.

### Beispiel 1:

### Herstellung und Eigenschaften von TiO₂-HfO₂-Einzelschichten

Zunächst wurde Hafnium-Ethoxid 0,5 molar in mit HCl angesäuertem Ethanol gelöst. Derartige Tauchlösungen wurden später mit entsprechend angesetzter 0,5 molarer Titan-Alkoxid-Lösung in den gewünschten molaren Ti:Hf-Verhältnissen gemischt. Es wurden Tauchlösungen für TiₓHf₁₋ₓO₂ mit x = 0/0,37/0,50/0,625/0,75/0,815/0,88/0,92/0,95/0,98/ sowie 1,0 (als Referenz) hergestellt. Als Substrate wurden Rohre aus Quarzglas verwendet.

Bei einer Ziehgeschwindigkeit von etwa 3,5 mm/s wurden in einem Tauchvorgang mit nachfolgender fünfminütiger Wärmebehandlung bei 9OO°C oder 1100°C an Luft Mischoxidschichten unterschiedlicher Zusammensetzung mit einer Dicke von etwa 0,055»m (±10%) hergestellt. Für eine optische λ/4-Schicht der Dicke 0,11»m ( λ= 1,1»m im Falle infrarotreflektierender Filter) waren also zwei Tauchvorgänge erforderlich.

Auf diese Weise hergestellte reine Hafniumoxid-Schichten (x = O) sind optisch von schlechter Qualität, erst bei Übergang zu niedrigmolaren Lösungen (0,16 Mol/l) und 6 statt 2 Tauchvorgängen werden optisch brauchbare Schichten erhalten, deren Brechungsindex im Infraroten allerdings nur je nach Wärmebehandlungstemperatur (900, 1100°C) 1,85 bzw. 1,95 erreicht. Ähnliches gilt für das Mischungsverhältnis x = 0,37, bei dem ebenfalls mehr als zwei Tauchvorgänge erforderlich sind und nur Brechungsindizes von 1,92 bzw. 2,O erhalten werden.

Im Gegensatz dazu ließen sich TiO₂-HfO₂-Schichten im Bereich der Mischungsverhältnisse von x = 0,50 bis 0,98 mit einer - hohen optischen Brillanz herstellen. Die 0,11»m dicken Schichten sind rißfrei, stark reflektierend und zeigen selbst nach Wärmebehandlung bei 1100°C keinerlei Streuung. Letzteres gilt für die Schichten mit geringstem Hafniumgehalt (2 Mol%) etwas eingeschränkt, auch hier ist jedoch die Streuung erheblich gegenüber dem reinen bei 11OO°C wärmebehandelten TiO₂ reduziert.

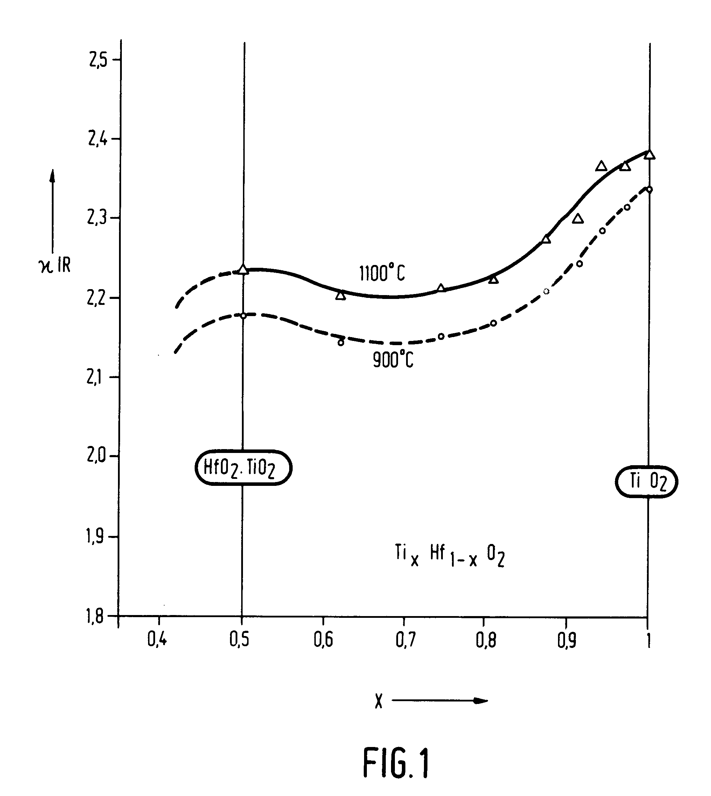

Die Brechungsindizes n_{IR} der TiₓHf₁₋ₓO₂-Tauchschichten (bei λ ≈ 1,1»m) sind in Fig. 1 als Funktion des Mischungsverhältnisses x dargestellt. Die gestrichelte Kurve faßt die Resultate nach 900°C-Wärmebehandlung (5 min) zusammen, die ausgezogene Linie mittelt die Ergebnisse nach 1100°C-Wärmebehandlung (5 min). Im letzteren Fall werden Schichten mit höheren Brechungsindizes realisiert, was durch eine reduzierte Porosität verursacht sein dürfte. Beginnend bei reinem Titanoxid, sinkt der Brechungsindex generell mit steigender Hafniumdotierung, durchläuft ein flaches Minimum bei x ≈ 0,70 und steigt zum Hafniumtitanat HfTiO₄ hin leicht an. Anzumerken ist, daß Wärmebehandlungstemperaturen höher als 1100°C wegen möglicher Rekristallisation des Quarzglassubstrates nicht sinnvoll sind.

### Beispiel 2:

### Herstellung und Eigenschaften von TiₓHf₁₋ₓO₂/SiO₂-Filtern

Mit einigen der Titan-Hafnium-Tauchlösungen gemäß Beispiel 1 (x=0,98/0,95/0,92/0,88/0,75/0,50 entsprechend 2/5/8/12/25/50 Mol% Hf) wurden infrarotreflektierende Filter mit 18 Schichten außen auf Quarzglasrohre (Außendurchmesser 10 mm) aufgebracht.

Das Filterdesign hatte die Schichtenfolge
Substrat H L H L H L H L H 2L H 2L H 2L H 2L H L/2, wobei H eine hochbrechende TiO₂-HfO₂-Schicht mit der optischen λ /4-Dicke bedeutet, also n_{H}.d_{H} = λ /4 (λ = 1,1»m), somit d_{H} ≈ 0,11»m. Ebenso bezeichnet L eine niedrigbrechende SiO₂-Schicht mit λ /4-Dicke, also n_{L}.d_{L} = λ /4, mit n_{L} = 1,45 und d_{L} = 0,19»m. Die Nomenklaturen 2L und L/2 kennzeichnen Schichten der doppelten bzw. halben Dicke.

Die Kristallstrukturen in den hochbrechenden Schichten der Filter wurden mit Hilfe der Röntgendiffraktometrie untersucht. Dabei wurde festgestellt, daß beginnend mit TiO₂ (x=O) nach 900°C-Wärmebehandlung die Schichten mit der Zusammensetzung x=0,98/0,95/0,92/0,88 (2 bis 12 Mol% Hf) alle einphasig sind und das Kristallgitter des Anatas besitzen. Für x=0,88 wird eine völlig untexturierte Anatas-Schicht erhalten, d.h. die Kristallrichtungen sind räumlich völlig statistisch verteilt. Dabei ist die a-Achse innerhalb der Fehlergrenzen gegen TiO₂-Anatas unverändert, während die tetragonale c-Achse um 1,0% verlängert ist.

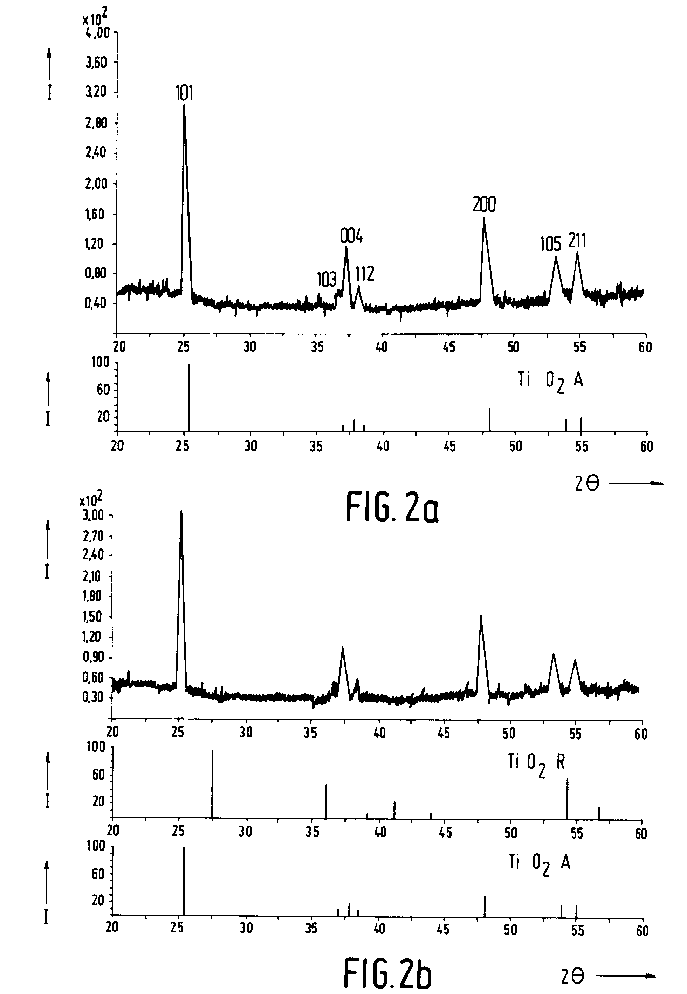

In Fig. 2a und 2b sind Röntgenbeugungsdiagramme eines 18-Schichten-Filters mit 12 Mol% Hf in den hochbrechenden Schichten (x=0,88) nach Herstellung bei 900°C (Fig. 2a) und 1100°C (Fig. 2b) dargestellt, wobei I Intensität (in willkürlichen Einheiten) und 2 ϑ Beugungswinkel bedeuten. Unter den Diagrammen sind zum Vergleich der Literatur entnommene Linienspektren dargestellt, wobei A = Anatas, R = Rutil. Offensichtlich bleibt auch bei 1100°C Wärmebehandlungstemperatur die Anatasstruktur erhalten, eine Phasenumwandlung in die Rutilstruktur findet nicht mehr statt.

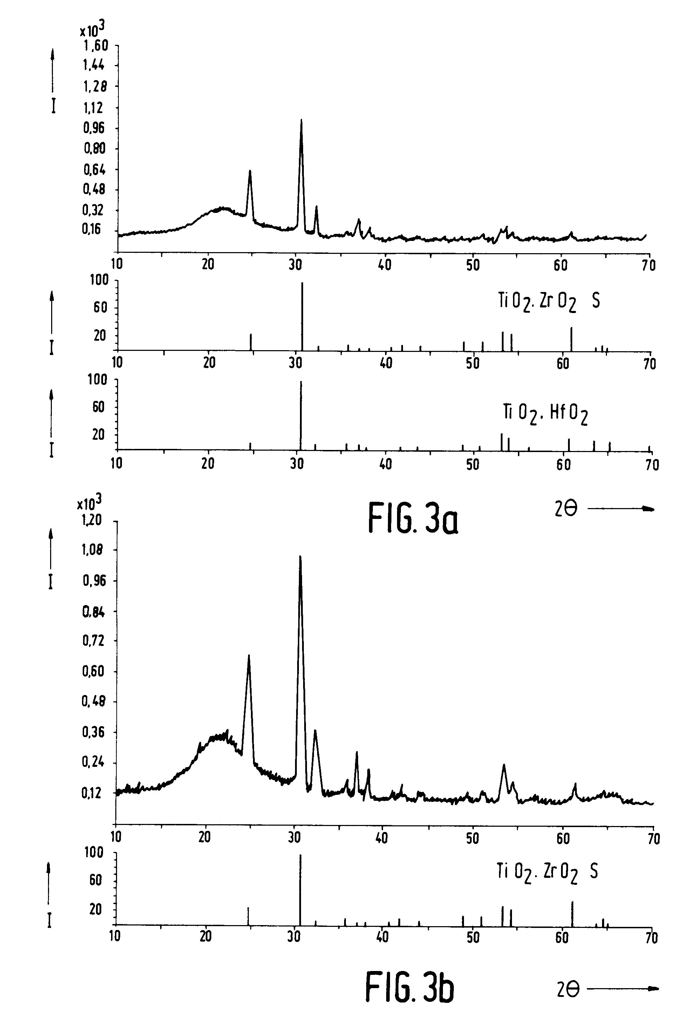

Schichten mit der Zusammensetzung 0,815/0,75/0,625 (18,5 bis 37,5 Mol% Hf) sind nach Herstellung bei 900°C zweiphasig mit Anatas und Hafniumtitanat als Phasen, aber dennoch optisch brillant. Das Mischungsverhältnis x=O,50 ist einphasig und wurde als schwach texturiertes Hafniumtitanat HfTiO₄ mit den Strukturdaten des Srilankit ZrTiO₄ identifiziert, dieses besitzt die in der Literatur für HfTiO₄ berichtete orthorhombische α-PbO₂-Struktur, siehe die Linienspektren in Fig. 3a und 3b, wobei S = Srilankit. Die für 900°C und 1100°C erhaltenen Röntgendiagramme eines 18-Schichten-Filters mit HfTiO₄ sind ebenfalls in Fig. 3a und 3b dargestellt: Auch hier wird für beide Wärmebehandlungstemperaturen die gleiche Kristallstruktur realisiert. Es wurde 5 min bei 900°C (Fig. 3a) bzw. 1100°C (Fig. 3b) wärmebehandelt. Dicke der Einzelschicht: jeweils 1,1»m.

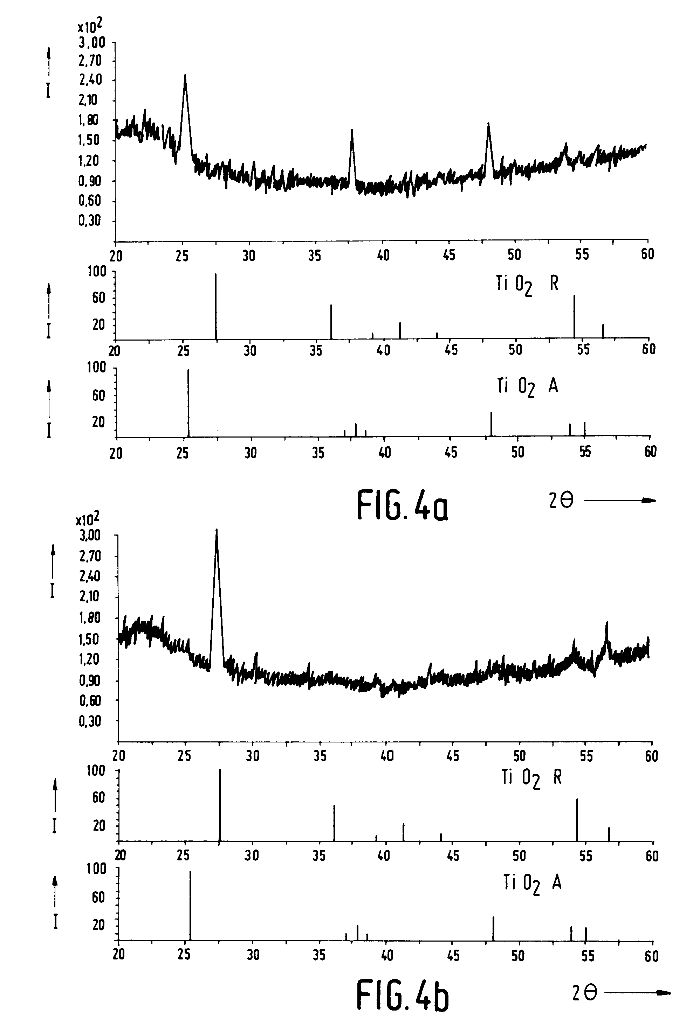

Als Referenz sind in Fig. 4a und 4b die Röntgenbeugungsdiagramme reiner (undotierter) TiO₂-Tauchschichten (Einzelschichten, 5 min wärmebehandelt bei 900°C (Fig. 4a) und 1O8O°C (Fig. 4b)) dargestellt. Bei 900°C wird reiner Anatas, bei 1080°C reiner Rutil realisiert. In beiden Fällen wird eine deutliche Textur erhalten. Mit dem Tauchverfahren hergestellte Rutil-Einzelschichten zeigen bereits sichtbare Streuung, wodurch im Falle höherer Schichtenzahlen stark streuende, unbrauchbare Filter erhalten werden. Dabei scheint es unerheblich zu sein, ob Rutil durch eine thermische Nachbehandlung von Anatas-Tauchschichten oder auf "direktem" Wege erhalten wurde.

Analoges gilt für Titan-Hafnium-Mischoxid-Schichten mit einem Hafniumanteil von etwa 8 bis 50 Mol%: Eine thermische Nachbehandlung von bei 900°C wärmebehandelten Schichten bei 1100°C liefert das gleiche Ergebnis wie direkt bei 1100°C wärmebehandelte Schichten, nämlich Anatas bzw. Anatas und Hafniumtitanat.

Zusammenfassend läßt sich sagen, daß schon die Zugabe von 2 bis 5 Mol% Hf (x=0,98/0,95) den Anatas-Rutil-Übergang weitgehend unterdrückt, 1100°C-Proben mit 8 Mol% Hf oder mehr (x ≦ 0,92) enthalten keinerlei Rutil und sind streufrei: Die Lösung von Hafnium im Titandioxid kann also den Phasenübergang völlig unterdrücken und wirkt somit als Stabilisator für die Anatas-Kristallstruktur.

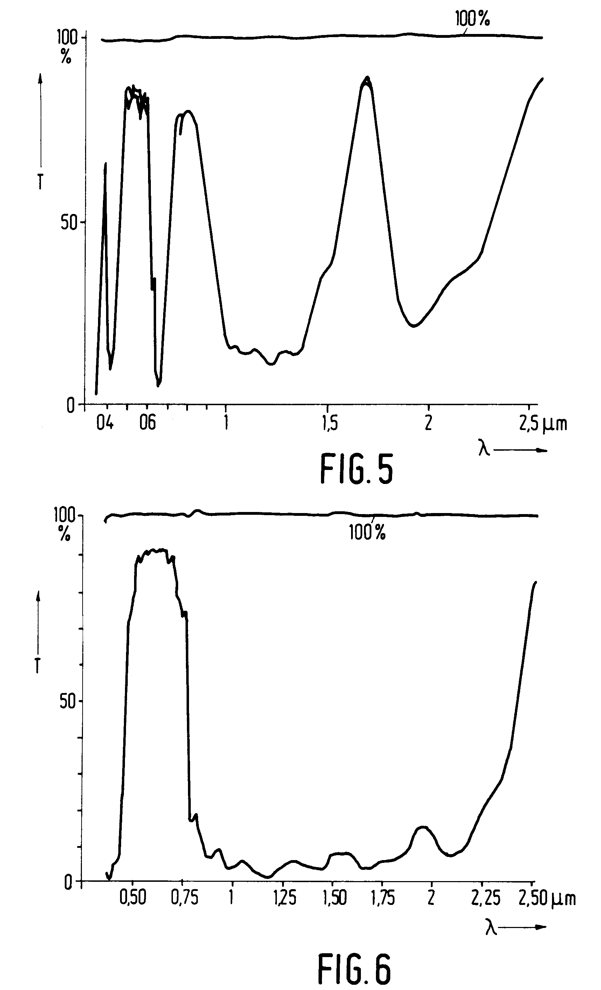

An Filtern mit vielen Schichten ist der Effekt der Hafnium-Dotierung besonders drastisch: Mit 2 Mol% Hf wird die Rißstruktur nach Herstellung schon deutlich günstiger, bei 5 Mol% wird ein nur wenig streuendes Filter erhalten, das jetzt sogar im Temperaturwechseltest zwischen 900°C und Raumtemperatur stabil ist. Mit 12 Mol% Hf-Dotierung wurden außerordentlich brillante, streufreie Filter bei 900°C auf Quarzglas hergestellt. Die Rißstruktur dieses Filters ist durch große Schollen und feine Risse gekennzeichnet und verändert sich nach mehr als 2000 h im Stabilitätstest bei 900°C nicht. Die Größe der Schollen hängt in gewissen Grenzen von der Qualität der Substratoberfläche ab, generell erzeugten Imperfektionen zusätzliche Risse. Mit dem Mischungsverhältnis x=88 (12 Mol% Hf) wurden auch Filter auf Quarzglas bei 1050 bis 1100°C hergestellt, diese sind gleichermaßen brillant und stabil. Fig. 5 zeigt stellvertretend das Transmissionsspektrum (Transmissionsgrad T in Prozent über der Wellenlänge λ) eines solchen Filters (L etwa 20% zu dick) nach Herstellung (Wärmebehandlungstemperatur 1050°C; durchgezogene Linie) und nach 1100 h im 900°C-Stabilitätstest (gestrichelte Linie): Innerhalb der Fehlergrenzen sind die Spektren identisch.

Auch die Filter mit den Mischungsverhältnissen x=0,75 und 0,50 (25 bzw. 50 Mol% Hf), hergestellt bei 900°C, sind optisch vergleichbar und haben mehr als 2000 h dem 900°C-Temperaturwechseltest ohne Veränderung des optischen Spektrums und der Festigkeit im Klebebandtest widerstanden. Die letztgenannten Mischungsverhältnisse lassen sich ebenso bei 1100°C Wärmebehandlungstemperatur herstellen. Es hat sich aber ergeben, daß Filter mit mehr als 18 Schichten und H-Schichten aus TiₓHf₁₋ₓO₂, wobei ₓ = 0,75, optisch nicht stabil sind.

Eine für das Tauchverfahren besonders geeignete Filterkonstruktion hat die Schichtdickenanordnung
S(HL)⁵ (H2L)² H L H (2LH)² 2L2H 2L H L/2,
die bei einem Brechungsindex n_{H} = 2,35 und einer Designwellenlänge von λ = 1,15»m das Gewünschte leistet. Das Transmissionsspektrum dieses Filters ist in Fig. 6 dargestellt.

Der Verlauf der Brechungsindizes der TiO₂-HfO₂-Schichten in Abhängigkeit vom Mischungsverhältnis (Fig. 1), sowie die Resultate der Stabilitätsuntersuchungen an Filtern zeigen, daß generell der Bereich niedriger Hafniumdotierungen besonders attraktiv ist: Im Bereich von 5 bis 12 Mol% Hf-Dotierung wird ausreichende Stabilität erzielt, die Brechungsindizes liegen oberhalb von 2,30.

Demgegenüber waren 18-Schichten-IR-Tauchfilter mit reinem TiO₂ als hochbrechendem Material auf Quarzglas unabhängig von der Wärmebehandlungstemperatur nicht stabil. So konnten z.B. bei 900°C 5 min lang wärmebehandelte Filter, die starkes Craquelée und deutliche Streuung zeigten, schon nach einigen Stunden in einem Temperaturwechseltest zwischen 600°C und Raumtemperatur (jeweils 20 min bei hoher Temperatur, 10 min bei Raumtemperatur) mittels Klebebandtest weitgehend vom Substrat gelöst werden.

Die Ursachen des gegenüber undotiertem TiO₂ außerordentlichen Stabilitätsgewinns liegen vermutlich darin, daß neben der Stabilisierung der Anatasphase und Bildung praktisch texturfreier Schichten der lineare Ausdehnungskoeffizient durch die Zugabe von Hafnium gesenkt wird, allerdings - in linearer Näherung - nur um etwa 7 bis 13% (bei 5 bis 12 Mol% Hf). Vermutlich wird zusätzlich durch Hafniumdotierung die Bruchspannung des Titanoxids erheblich erhöht und dadurch die Ausbreitung von Rissen behindert.

Neben dem Bereich niedriger Hf-Dotierung ist in zweiter Linie noch das stöchiometrische und einphasige Hafniumtitanat HfTiO₄ (x=0,50) interessant, da hier ein Brechungsindex von immerhin bis 2,24 erzielt wird.

In jedem Fall lassen sich mit Titan-Hafnium-Mischoxiden bei einem Hafnium-Anteil von 5 bis 50 Mol% optische Schichten herstellen, die - mit dem Tauchverfahren auf Quarzglas abgeschieden - bis zur Anwendungsgrenze des Quarzglassubstrates (etwa 1100°C) ohne strukturelle Veränderungen stabil sind.

### Beispiel 3:

### Weitere Herstellungsverfahren

Die Herstellung Hafnium-haltiger Tauchlösungen, die für das Tauchverfahren mit einer Titan-haltigen Lösung gemischt werden, ist statt mit Hafnium-Ethoxid Hf(OC₂H₅)₄ auch mit anderen Alkolaten (Isopropoxid oder Butoxid) möglich. Auch alkoholische Lösungen von wasserhaltigem Oxychlorid HfOCl₂.8 H₂O ergeben brauchbare optische Mischoxidschichten.

Ein Vorteil des Tauchverfahrens bei der Lampenherstellung ist z.B. die Möglichkeit der simultanen Herstellung einer Innen- und Außenbeschichtung eines zylindrischen Lampenkolbens; hierdurch kann nahezu die Hälfte der Beschichtungsvorgänge eingespart werden.

Für die Außenbeschichtung fertiger, z.B. kleiner ellipsoidförmiger Lampen, ist die thermische LPCVD eine besonders geeignete Methode. Hier kann z.B. Titan-Ethoxid oder Titan-Isopropoxid gemeinsam mit einem Hafniumalkoxid (Isopropoxid oder Butoxid) thermisch zersetzt werden.

Der Mischgasstrom wird durch Sättigen von Inertgas (Argon) oder Reaktivgas (Argon/Sauerstoff) in zwei getrennten Sättigern hergestellt, das gewünschte Oxid-Mischungsverhältnis läßt sich durch Variation der Quellentemperaturen und Teilströme einstellen. Es ist auch die Verdampfung einer Titan-Hafnium-Alkoxidmischung aus einer Quelle möglich. Die Stabilität gleichartiger CVD-Filter ist gleich der oder besser als die von Tauchfiltern.

Letzteres gilt auch für die Plasma-CVD, wo festes HfCl₄ bei etwa 150°C im Ar-Gasstrom sublimiert wird und zusammen mit TiCl₄ im Plasma quantitativ zu Ti-Hf-Mischoxid und Cl₂ umgesetzt wird. Auch ist die plasmaunterstützte simultane Zersetzung von Titan- und Hafnium-Alkoxiden möglich. Die mit PCVD erhaltene Innenbeschichtung kann nach Anbringen einer SiO₂-Schutzschicht auch in Lampenatmosphäre verwendet werden.

Eine weitere Herstellungsmethode für TiO₂-HfO₂-Schichten ist das physikalische Bedampfen (PVD). Hier können z.B. Titan und Hafnium als Metalle in zwei Tiegeln simultan per Elektronenstrahl verdampft und in reaktiver Sauerstoff-Atmosphäre auf geheiztem Substrat niedergeschlagen werden; auch ist die reaktive Verdampfung substöchiometrischer Oxide möglich. Die Schichtqualität der Aufdampfschichten kann durch Ionenbeschuß des Substrates mit O₂⁺ oder Ar⁺-Ionen während des Aufwachsens verbessert werden. Mit Hilfe des Aufdampfverfahrens können ebene Substrate sehr präzise mit Interferenzfiltern aller Art beschichtet werden, es lassen sich beispielsweise aber auch Lampenreflektoren auf diese Weise mit temperaturstabilen Kaltlichtspiegeln beschichten.

Eine weitere Herstellungsmethode für TiO₂-HfO₂-Schichten ist das Kathodenzerstäubungsverfahren (Sputtern). Hier ist sowohl dc-magnetron-sputtering mit metallischem Titan-Hafnium-Target und reaktivem Niederschlag in Ar/O₂-Atmosphäre möglich, als auch Hochfrequenzsputtern mit oxidischem Mischtarget. Mit dem Sputterverfahren werden bevorzugt ebene und großflächige Substrate beschichtet.

### Beispiel 4:

### Optische TiO₂-Nb₂O₅-Schichten und deren Filterkombinationen mit SiO₂

Niob-Ethoxid wurde zur Herstellung einer Niob-Tauchlösung 0,5molar in angesäuertem Ethanol/Butanol gelöst. Aus dieser Tauchlösung wurden bei einer Wärmebehandlungstemperatur von 900°C optisch brillante Viertelwellenlängendicken (0,12»m) von Nb₂O₅ auf Quarzglassubstrat hergestellt, der Brechungsindex im nahen Infrarot betrug 2,20. Filterkombinationen mit SiO₂-Schichten zeigten trotz Rißfreiheit keine Stabilität auf Quarzglassubstrat: Typischerweise bei 10 Schichten lösen sich derartige Filter glatt in Form großer Flitter ab.

Es wurden zwei Mischoxidschichten (TiO₂)ₓ(Nb₂O₅)₁₋ₓ mit den nominellen Mischungsverhältnissen x = 0,50 und x = 0,90 (50 bzw. 10 mol% Nb-Oxid) untersucht. 5 min bei 900°C wärmebehandelt, waren Viertelwellenlängendicken in beiden Fällen optisch brillant, der Brechungsindex betrug 2,24 bzw. 2,30. Die Röntgendiffraktrometrie zeigt, daß für x = 0,50 eine einphasige Schicht realisiert wird, die dem in der Literatur bekannten monoklinen Nb₂TiO₇ entspricht. Für den Fall der Lösung von 10 mol% Nb₂O₅ in TiO₂ wird eine zweiphasige Schicht erhalten, die aus TiO₂-Anatas und aus Niobtitanat Nb₂TiO₇ besteht. Eine Wärmebehandlung bei 1100°C ergibt im letzteren Fall nach wie vor eine Anatas-Rutil-Umwandlung und eine streuende, nicht brauchbare Schicht. Auch im Falle des stöchiometrischen Nb₂TiO₇ werden bei 1100°C wärmebehandelte Schichten deutlich streuend, so daß ihre optische Anwendung auf unter etwa 900°C beschränkt ist.

Mit den Ti-Nb-Mischlösungen wurden ebenfalls 18-Schichten IR-Filter hergestellt, das Design entsprach der in Beispiel 2 an erster Stelle angegebenen Schichtenfolge. Während (TiO₂)_{0,90}(Nb₂O₅)_{0,10}/SiO₂-Filter, bei 900°C wärmebehandelt, trotz leichter Reduktion der Streuung und einer günstigeren Rißstruktur keinen nennenswerten Stabilitätsvorteil gegenüber undotierten TiO₂/SiO₂-Filtern ergaben, ließen sich mit Nb₂TiO₇ rißarme und sehr stabile Filter herstellen. Die Rißstruktur von Nb₂TiO₇ ist noch günstiger als die Strukturen der Ti-Hf-Mischoxidreihe, der Temperaturwechseltest zwischen 900°C und Raumtemperatur induziert nach einigen 100 h keinerlei zusätzliches Craquelée.

Die Herstellung von 26-Schichten-IR-Filtern mit dem Tauchverfahren ist völlig problemlos, allerdings können wegen der nun doch stärker sichtbaren Streuung der Filter Wärmebehandlungstemperaturen oberhalb von 900°C nicht angewandt werden. Der Brechungsindex der Niobtitanat-Schichten beträgt etwa 2,24.

Die für Titan/Hafnium-Oxid möglichen Herstellungsverfahren von Beispiel 3 können analog auch für Niobtitanat-Schichten zum Einsatz kommen. Für die plasmaunterstützte CVD (PCVD) auf der Basis der Oxidation von Niobchlorid NbCl₅ ist allerdings einschränkend auf die hohe Stabilität der Nioboxychloride hinzuweisen, die zu chlorhaltigen Schichten führen dürfte.

### Beispiel 5:

### Schichten aus reinem Tantalpentoxid Ta₂O₅

Durch Lösen von flüssigem Tantalethoxid Ta(OC₂H₅)₄ in mit 8 cm³/l HCl-konz. angesäuertem Ethanol (absolut) wurde in Analogie zum Titan-Lösungsansatz eine 0,5-molare Tantaloxid-Tauchlösung hergestellt. Mit dieser Lösung wurden auf Quarzrohre (Durchmesser 10 mm) Viertelwellenlängen-Schichten der Gesamtdicke 0,130»m in zwei Tauchgängen hergestellt. Die Wärmebehandlung erfolgte jeweils 5 Minuten bei 900°C an Luft.

Die erhaltenen Schichten sind lichtmikroskopisch rißfrei, besitzen einen Brechungsindex von 2,08 (bei 1,10»m Wellenlänge), und sind laut Röntgenbeugung polykristallin mit Ta₂O₅-Struktur.

Nachteilig ist die deutliche Lichtstreuung dieser Schichten, die sich bei dickeren Einzelschichten (z.B. 0,40»m) noch erheblich verstärkt. Wegen des mäßigen Brechungsindex und dieser Streuung wurden keine Filter hergestellt.

### Beispiel 6:

### Schichten aus Ta₂O₅. TiO₂und Filter mit Quarzglas

Zwei jeweils 0,5-molare Tantal- bzw.
Titanethoxid/Ethanol-Lösungen wurden im Volumenverhältnis 2:1 gemischt, um das Metall-Mischungsverhältnis Ta/Ti von 2 zu erhalten.

Mit dieser Mischung wurden zunächst in zwei Tauchgängen Schichten mit der Dicke 0,12»m hergestellt, wärmebehandelt wurde jeweils 5 min bei 900°C oder bei 1040°C.

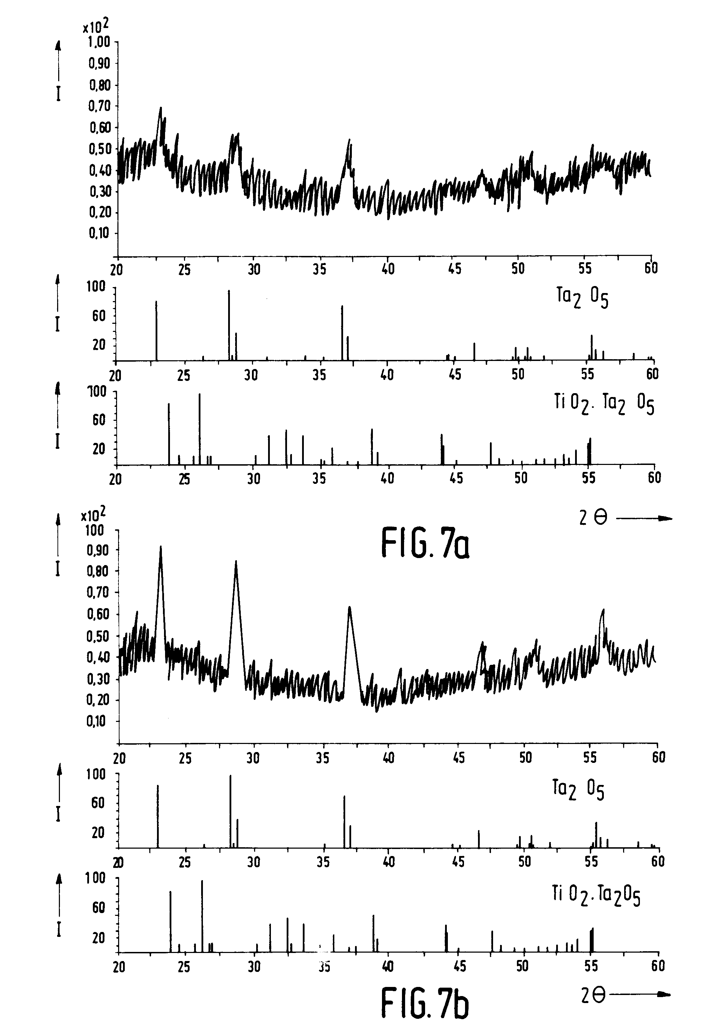

Es wurden lichtmikroskopisch rißfreie Schichten mit einem Brechungsindex bei 1,10»m von 2,24 (900°C) und 2,26 (1040°C) erhalten. Diese sind selbst bei 1040°C Wärmebehandlung noch völlig klar und nichtstreuend, was gegen die beiden "reinen" Oxide Ta₂O₅ und TiO₂ einen erheblichen Fortschritt bedeutet. Auch sind 0,36»m dicke Einzelschichten bei 1040°C Wärmebehandlung nur sehr wenig streuend.
Die Schichten sind kristallin mit interessanterweise ebenfalls Ta₂O₅-Struktur (Fig. 7a:
Wärmebehandlungstemperatur 900°C; Fig. 7b:
Wärmebehandlungstemperatur 1040°C), laut Rutherford-Backscattering-Analyse (RBS) ist das gewünschte Metall-Mischungsverhältnis exakt realisiert.

Es wurden nun Filter aus kristallinen Ta₂TiO₇-Schichten und amorphen SiO₂-Schichten hergestellt.
Die SiO₂-Tauchlösung wird durch Lösen von Siliziumethoxid Si(OC₂H₅)₄in mit 78 cm³/l 1-normaler HCl angesäuertem Ethanol hergestellt, die Molarität des Alkoxids beträgt 1,0 Mol/l.

Filter mit 26 Schichten und dem zweiten Design gemäß Beispiel 2 wurden problemlos bei 900°C Wärmebehandlungstemperatur hergestellt.
Zwei derartige Filter wurden zusätzlich mit einem HL-Stapel von 8 Schichten versehen, so daß Filter mit 34 Schichten erhalten wurden.

Diese haben eine günstige Rißstruktur mit relativ großen Schollen, die sich auch nach 3000 h im Temperaturwechseltest zwischen 900°C und Raumtemperatur nicht veränderte, wodurch eine für die Anwendung als hochtemperaturstabiles Wärmereflexionsfilter ausreichende Stabilität nachgewiesen ist.
Ein weiteres Filter mit 26 Schichten wurde sogar bis 40 Schichten weiterbeschichtet.

### Beispiel 7:

### Schichten aus Ta₂O₅ . 2TiO₂= Ta₂Ti₂O₉ und Filter mit Quarzglas

Der in Beispiel 6 verwendeten Lösung wurde weitere Ti-Lösung beigemischt, um ein Metall-Mischungsverhältnis von Ta/Ti = 1 zu realisieren. Bei 900°C (5 min) hergestellte Schichten mit 0,12»m Dicke sind rißfrei und besitzen einen Brechungsindex von 2,26, auch dickere Schichten (0,36»m) sind nur wenig streuend.
Laut Röntgenbeugung sind diese Mischoxidschichten polykristallin, aber zweiphasig mit überwiegend Ta₂O₅-Struktur und einem geringeren Teil TiO₂-Anatas. Auffallend ist der breite Existenzbereich der Ta₂O₅-Struktur in Richtung Titan.

Mit diesem Mischungsverhältnis wurden ebenfalls auf Quarzglasrohren in Kombination mit SiO₂ Filter abgeschieden.
Es lassen sich IR-Filter mit 26 Schichten gerade noch stabil herstellen, bei 30 Schichten traten erhebliche Ablösungserscheinungen auf.

Dies ist vermutlich auf den gegenüber Ta₂TiO₇ doch deutlich höheren Ausdehnungskoeffizienten zurückzuführen. Das Mischungsverhältnis Ta/Ti = 1 ergibt also wegen der Zweiphasigkeit und der geringeren Filterstabilität ein weniger geeignetes Material als Ta₂TiO₇, es besitzt jedoch gegenüber "reinem" Titandioxid einen erheblichen Stabilitätsvorteil.

### Beispiel 8:

### Zirkonium-Dotierung

Es wurde festes Zirkoniumethoxid 0,5-molar in angesäuertem Ethanol gelöst und mit Titanlösung im Verhältnis von 10:90 gemischt. Die bei 900°C (5 min) wärmebehandelten Zr_{0,1}Ti_{0,9}O₂-Schichten der Dicke 0,13»m sind riß- und streufrei, der Brechungsindex bei 1,10»m beträgt 2,20.

Die Röntgenbeugung von bei 1040°C hergestellten Schichten bzw. von bei dieser Temperatur thermisch nachbehandelten 900°C-Schichten zeigt, daß die Zugabe von 10 Mol% Zirkonium zum Titan ebenfalls wie Hafnium die Anatasphase stabilisiert.

Die Herstellung von Zr_{0,1}Ti_{0,9}O₂/SiO₂-Filtern ergab, daß 22 Schichten noch stabilisiert werden können, es wird also gegenüber dem undotierten TiO₂ (14 bis 16 Schichten bei IR-Filtern) auch ein Stabilitätsgewinn erzielt. Gegenüber der entsprechenden Titan-Hafnium-Mischung ist die Rißstruktur dieses Filters jedoch etwas ungünstiger.

## Patentansprüche

1. Optisches Interferenzfilter mit einer alternierenden Folge von niedrigbrechenden ersten Schichten und hochbrechenden zweiten Schichten auf einem Glassubstrat, wobei die ersten Schichten im wesentlichen aus amorphem SiO₂ bestehen und die zweiten Schichten im wesentlichen aus TiO₂ und einem zweiten Metalloxid bestehen, wobei das zweite Metalloxid aus einer Gruppe gewählt ist, zu der ZrO₂, HfO₂ und Ta₂O₅ gehören,
dadurch gekennzeichnet, daß das Material der zweiten Schichten ein kristallines Mischoxid ist, gewählt aus einer Gruppe, die aus
88 bis 95 Mol% TiO₂ und 5 bis 12 Mol% ZrO₂,
88 bis 95 Mol% TiO₂ und 5 bis 12 Mol% HfO₂,
TiO₂.ZrO₂, TiO₂.HfO₂, TiO₂.Nb₂O₅,
TiO₂.Ta₂O₅ und Ta₂O₅.2 TiO₂
sowie aus Mischungen dieser Materialien besteht, wobei die Kristallstruktur der zweiten Schichten einer Kristallstruktur entspricht, die bei einer Wärmebehandlung bei einer Temperatur zwischen 700 und 1100°C entsteht.

## Claims

1. An optical interference filter having an alternating sequence of first layers of low refractive index and second layers of high refractive index on a glass substrate, the first layers basically consisting of amorphous SiO₂ and the second layers basically consisting of TiO₂ and a second metal oxide, the second metal oxide being chosen from a group to which ZrO₂, HfO₂ and Ta₂O₅ belong, characterized in that the material of the second layers is a crystalline mixed oxide chosen from a group consisting of:
88-95 Mole% TiO₂ and 5-12 Mole% ZrO₂,
88-95 Mole% TiO₂ and 5-12 Mole% HfO₂,
TiO₂.ZrO₂, TiO₂·HfO₂, TiO₂.Nb₂O₅,
TiO₂.Ta₂O₅ and Ta₂O₅.2 TiO₂,
and also of mixtures of these materials, the crystal structure of the second layers corresponding to a crystal structure obtained in a heat treatment at a temperature between 700 and 1100°C.

## Revendications

1. Filtre optique interférentiel comprenant une succession alternante de premières couches faiblement réfringentes et de secondes couches fortement réfringentes sur un substrat de verre, dont les premières couches consistent essentiellement en SiO₂ amorphe et les secondes couches consistent essentiellement en TiO₂ et en un second oxyde métallique, le second oxyde métallique étant choisi dans une classe à laquelle ZrO₂, HfO₂ et Ta₂O₅ appartiennent, caractérisé en ce que la matière de la seconde couche est un oxyde mixte cristallin choisi dans une classe constituée de :
88 à 95 moles % de TiO₂ et 5 à 12 moles % de ZrO₂;
88 à 95 moles % de TiO₂ et 5 à 12 moles % de HfO₂;
TiO₂.ZrO₂, TiO₂.HfO₂, TiO₂.Nb₂O₅,
TiO₂.Ta₂O₅ et Ta₂O₅.2 TiO₂,
ainsi que de mélanges de ces matières, la structure cristalline des secondes couches correspondant à une structure cristalline qui apparaît lors d'un traitement thermique à une température entre 700 et 1100°C.
